# EUROPEAN PATENT SPECIFICATION

(11) **EP 2 387 631 B1**
(45) Date of publication and mention of the grant of the patent: **22.04.2015**
(21) Application number: 09836426.8
(22) Date of filing: 30.12.2009
(51) Int. Cl.: D06F 37/22, D06F 39/00, D06F 37/26

(54) **LAUNDRY MACHINE**
WASCHMASCHINE
LAVE-LINGE

(30) Priority: 30.12.2008 KR 20080136372; 28.05.2009 KR 20090047192; 27.08.2009 KR 20090079909; 30.12.2009 KR 20090134464
(43) Date of publication of application: 23.11.2011
(73) Proprietor: LG Electronics Inc., Seoul 150-721 (KR)
(72) Inventor: MOON, Suk Yun, Seoul 153-802 (KR); LEE, Dong Il, Seoul 153-802 (KR); KWON, Ig Geun, Seoul 153-802 (KR); KIM, Soo Bong, Seoul 153-802 (KR)
(74) Representative: Ter Meer Steinmeister & Partner
(86) International application number: PCT/KR2009/008002
(87) International publication number: WO 2010/077105

(56) References cited:
- EP-A1- 1 666 656
- EP-A1- 1 908 873
- EP-A2- 1 433 890
- EP-A2- 1 433 891
- EP-A2- 1 605 088
- WO-A2-2005/090670
- DE-A1- 4 222 736
- DE-A1- 19 609 287
- DE-U1- 29 724 890
- JP-A- 4 240 482
- JP-A- 2003 245 489
- JP-A- 2003 290 588

## Description

### Technical Field

The present invention relates to a laundry machine, more specifically, to a laundry machine that is able to improve a structure thereof in order to improve a washing capacity and an improved structure of pressure adjustment of a tub.

### Background Art

Generally, washing machines are home appliances that remove various dirt attached clothes, bedding, cloth items and the like (hereinafter, laundry) by using both friction of water currents caused by rotation of a drum and a shock applied to the laundry. Automatic laundry machines released recently may automatically perform a series of cycles, for example, a washing, rinsing and dry-spinning cycle, without a user's manual operation.

Recently, drum type laundry machines have getting popular more and more, because they have the heightened little trouble of wrinkles and tangling of laundry in comparison to pulsator type laundry machines having a tub rotated in a state of mounted vertically.

As a structure thereof will be schematically described, such a drum type laundry machine includes a cabinet defining an external appearance thereof, a tub mounted in the cabinet to hold wash water therein, a cylindrical-shaped drum provided in the tub to hold laundry therein. Here, the tub is supported by a damper and a spring and the drum receives a driving force from a driving assembly to wash the laundry.

The drum type laundry machine having the structure mentioned above cannot help generating vibration because of a rotational force thereof and eccentricity of the laundry when rotated to wash and dry-spin the laundry introduced therein. The vibration generated by the rotation of the drum is transmitted outside via the tub and the cabinet.

Because of that, the spring and the damper should be provided between the tub and the cabinet to dampen vibration generated between the tub and the cabinet and to prevent the vibration of the drum from being transmitted to the tub and next to the cabinet.

Such the drum type laundry machine mentioned above are usually installed in existing installation environments, for example, sink or built-in environments, not installed in auxiliary space independently. As a result, the size of such the drum type laundry machine has to be limited corresponding to its installation environments.

It is limited to change the inner structure of the above conventional drum type laundry machine because of the structure including the spring and damper to dampen the vibration between the tub and the cabinet and also it is limited to change the size of the laundry machine itself because its installation environments are limited.

In the meanwhile, researches and developments for increasing the washing capacity of the laundry machine have been in progress quite a lot recently to increase washing efficiency and user convenience. However, it is difficult in the limited conditions of the conventional drum type laundry machine to increase the size of the tub in order to increase the washing efficiency.

As a result, development of laundry machines having a diversified structure capable of increasing the washing efficiency has been required.

DE 42 22 736 A1 discloses a drum type washing machine comprising a tub to hold water therein and a drum provided rotatably in the tub. The tub vibrates together with the drum due to the rotation of the drum and is connected by a gasket to a door of the washing machine. Further, a ventilating channel is connected between a detergent box and the tub, in particular, to the gasket, to prevent forward movement of the drum generated by pressure difference during the rotation of the drum by drawing air into the drum during the rotation of the drum.

DE 297 24 890 U1 is considered with another washing machine comprising a tub having an inlet opening connected to a detergent box for water supply. A tube is connected between the inlet opening of the tub and an outlet opening of the detergent box. In the outlet opening, a dividing wall separates the water channel from a ventilating channel so that the tube is connected to both the water channel and the ventilating channel. Accordingly, air can be drawn from the tub through the ventilating channel to the detergent box 9.

EP 1605088 discloses a laundry washing machine according to the preamble of claim 1.

### Disclosure of Invention

### Technical Problem

To solve the problems, an object of the present invention is to provide a drum type laundry machine having a totally new structure of supporting a drum. Specifically, different from the conventional laundry machine, vibration of the drum is suspendedly supported, not transmitted to the tub.

Another object of the present invention is to provide a laundry machine having an improved sealing-structure of a tub to adjust a pressure inside the tub and to enlarge the capacity of tub simultaneously.

### Solution to Problem

To achieve these objects and other advantages and in accordance with the purpose of the invention, as embodied and broadly described herein, a laundry machine according to claim 1 is provided.

A laundry machine includes a cabinet defining an external appearance thereof, the cabinet comprising a base; a tub provided in the cabinet; a drum provided in the tub, the drum rotatable with respect to the tub; and a pressure adjusting part provided in the tub to prevent forward movement of the drum generated by pressure difference during the rotation of the drum.

The tub includes an opening formed in a rear portion thereof, a tub back provided in the opening and a rear gasket provided between the opening and the tub back to support the tub back rotatably, and the drum may be coupled to a shaft passing through the tub back.

The pressure adjusting part may be a pressure adjusting hole passing through a rim portion of the opening of the tub.

The rim portion includes a foreign-substance-prevention member and the pressure adjusting hole may be formed through the rim portion and the foreign-substance-prevention member.

The pressure adjusting hole may be formed beyond the height of water received in the tub.

The pressure adjusting hole may include a connection pipe connected thereto, the connection pipe curved upward.

The tub may include a water supply hose to supply water to the tub and the pressure adjusting part may be a pressure adjusting pipe branched from the water supply hose.

The tub may include a rim portion forming an opening formed in a front portion thereof and the water supply hose may be connected to the rim portion, passing through the rim portion.

The rim portion may include a foreign-substance-prevention member and the water supply hose may pass through the rim portion and the foreign-substance-prevention member.

The water supply hose may include a detergent box to supply water and detergent to the tub and the pressure adjusting pipe may be connected to the detergent box, branched from the water supply hose.

The tub may include a rim portion defining an opening formed in a front portion thereof and the pressure adjusting part may be a pressure adjusting protrusion extended from the rim portion, the pressure adjusting protrusion having a hollow formed therein.

The tub may further include a detergent box to supply water and detergent and the pressure adjusting protrusion may include a connection pipe connecting the pressure adjusting protrusion with the detergent box.

The pressure adjusting part may draw external air of the tub into the drum during the rotation of the drum.

In the laundry machine, the tub may be fixedly supported, or be supported by a flexible support structure, such as the suspension unit.

Further, the tub may be supported in an interim state between the fixed support and the flexible support.

That is, the tub may be flexibly supported by the suspension unit or be rigidly supported. For example, the tub may be supported by the suspensions, be supported by rubber bushings to provide less flexible movement than when supported by the suspensions, or be fixedly supported by being fixed somewhere by screws or so.

For another instance, the cases where the tub is supported more rigidly than when supported by the suspension unit are as follows.

Firstly, the tub may be made intergrally with the cabinet.

Next, the tub may be supported by being fastened by screws, ribets, rubber bushings, etc. Also, the tub may be welded or bonded to the cabinet. In this cases, the supporting or fastening members have larger stiffnesses than a stiffness of the suspension unit with respect to the main direction of the vibration of the drum.

The tub may be expanded within the limits of a space in which the tub is placed. That is, the tub may be expanded until the circumferential surface thereof reaches(or almost reaches) a side wall or a side frame (for example, a left or right plate of a cabinet) restricting the size of the space at least in the lateral direction (the direction laterally perpendicular to the axial direction of the rotary shaft when the rotary shaft is horizontally placed). The tub may be made intergally with the lateral side walls of the cabinet.

The tub may be formed to be closer in the lateral direction to the wall or the frame than the drum. For example, the tub may be spaced away from the wall or the frame by an interval of less than 1.5 times an interval with the drum. Under the condition that the tub is enlarged in the lateral direction, the drum may also be enlarged in the lateral direction. Further, if the lateral interval between the tub and drum is reduced, the drum may be expanded in the lateral direction in direct proportion. When the lateral interval between the tub and the drum is reduced, the vibration of the drum in the lateral direction may be considered. The weaker the vibration of the drum in the lateral direction, the more expanded is the diameter of the drum. Therefore, the suspension unit to reduce the vibration of the drum may be designed such that rigidity of the suspension unit in the lateral direction is greater than rigidities of the suspension unit in other directions. For example, the suspension unit may be designed such that rigidity of the suspension unit against displacement in the lateral direction is greatest compared with rigidities of the suspension unit against displacements in other directions.

Further, the suspension unit may be directly connected to the bearing housing supporting the rotary shaft. That is, the bearing housing comprises a supporting portion to rotatably support the shaft and an extended portion extended from the supporting portion, and the suspension unit is attached to the supporting portion of the bearing housing or the extended portion of the bearing housing.

The suspension unit may include brackets extended in the axial direction. In a front loading type laundry machine, the brackets may be extended forward, namely towards a door.

The suspension unit may comprises at least two suspensions which are arranged distant from each other in the axial direction of the shaft.

The suspension unit may comprise suspensions placed below the shaft for standing support. The supported object(for example, the drum) is supported by the suspensions to stand alone.

Alternately, the suspension unit may comprise suspensions placed over the shaft for hanging support. In this case, the supported object is supported to be hung.

The mass center of the vibrating object(for example, a combination of the drum, the shaft, the bearing housing, and the motor) may be located, with respect to the center of the longitudinal length of the drum, at a side where the motor is located. In a front loading type laundry machine, the mass center may be located behind the longitudinal center of the drum. In this case, at least one suspension may be placed in front of or behind the mass center. One suspension may be placed in front of the mass center and another suspension behind the mass center.

The tub may be provided with an opening at a rear portion thereof. The drive assembly may be connected to the tub by a flexible member. The flexible member may seal between the tub and the drive assembly to prevent water from leaking through the opening of the rear portion of the tub, and allow the drive assembly to move relatively to the tub. The flexible member may be made of a flexible material which can do the sealing, for example, a gasket material like a front gasket. In this case, the flexible member may be referred to as a rear gasket for convenience. The rear gasket may be connected to the drive assembly under the condition that the rotation of the rear gasket at least in the rotational direction of the rotary shaft is constrained. In one embodiment, the flexible material may be directly connected to the shaft. In another embodiment, the flexible material may be connected to a portion of the bearing housing.

Further, a portion of the drive assembly, which is located radially inside the rear gasket and thus is likely to be exposed to the water in the tub, may be made so as no to be corroded by the water. For example, the portion of the drive assembly may be coated, or be surrounded with a separate member made of plastic such as the tub back(which will be described below). In a case where the portion of the drive assembly is made of metal, the portion may not be directly exposed to water by the coating or the separate plastic member, and thus corrosion of the portion may be prevented.

Further, the cabinet may not be necessary. For example, in a built-in laundry machine, the laundry machine without the cabinet may be installed within a space of a wall structure. However, even in this case, a front plate forming the front face of the laundry machine may be required.

### Advantageous Effects of Invention

The present invention has following advantageous effects. The drum type laundry machine according to the present invention has a totally new structure of supporting a drum. Specifically, different from the conventional laundry machine, vibration of the drum is suspendedly supported, not transmitted to the tub.

Furthermore, the laundry machine can adjust a pressure inside the tub and enlarge the capacity of tub simultaneously. As a result, collision between the drum and the tub may be prevented.

### Brief Description of Drawings

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 is an exploded perspective view illustrating a laundry machine according to an exemplary embodiment of the present invention;
FIGS. 2 and 3 are perspective views illustrating a tub front of the laundry machine;
FIG. 4 is a rear-perspective view illustrating a tub rear of the laundry machine;
FIG. 5 is a perspective view illustrating a suspension of the laundry machine;
FIG. 6 is a side-sectional view illustrating connection between a tub and the suspension provided in the laundry machine;
FIG. 7 is a diagram illustrating pressure changes inside the tub of the laundry machine;
FIG. 8 is a perspective view illustrating a pressure adjusting part of the laundry machine according to a first embodiment of the present invention;
FIG. 9 is a perspective view illustrating a pressure adjusting part of the laundry machine according to a second embodiment of the present invention;
FIG. 10 is a perspective view illustrating a pressure adjusting part of the laundry machine according to a third embodiment of the present invention; and
FIG. 11 is a diagram illustrating pressure change inside the tub in the laundry machine according to the embodiments of the present invention.

### Best Mode for Carrying out the Invention

As follows, a laundry machine according to an exemplary embodiment of the present invention will be described in reference to the accompanying drawings.

Reference will now be made in detail to the specific embodiments of the present invention, examples of which are illustrated in the accompanying drawings. Wherever possible, the same reference numbers will be used throughout the drawings to refer to the same or like parts.

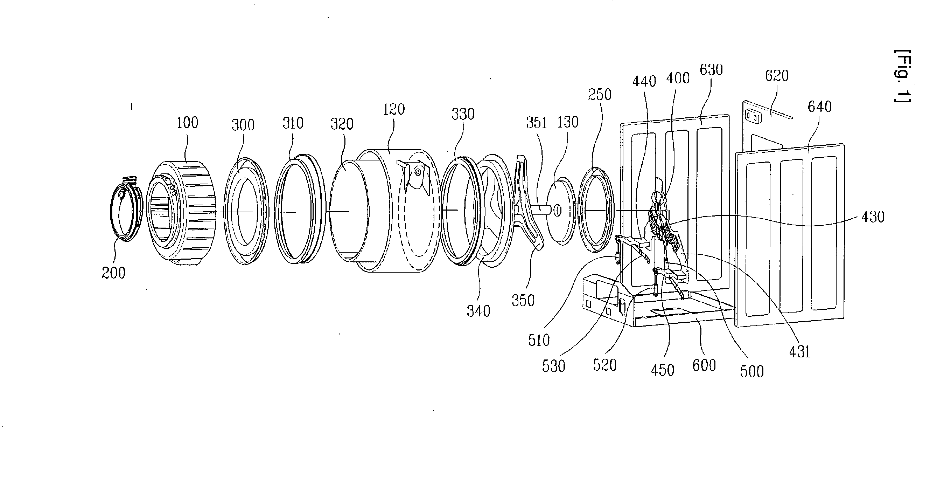

FIG. 1 is an exploded perspective view illustrating the laundry machine according to the exemplary embodiment of the present invention.

As shown in FIG. 1, the laundry machine includes a tub fixedly mounted to a cabinet. The tub includes a tub front 100 defining a front portion thereof and a tub rear 120 defining a rear portion thereof. The tub front 100 and the tub rear 120 are assembled by a screw and they may form a predetermined space to hold a drum. The tub further includes a tub back 130 defining a rear portion thereof and the tub back 130 is connected with the tub rear via a rear gasket 250. The rear gasket 250 is formed of flexible material not to transmit the vibration of the tub back 130 to the tub rear 120.

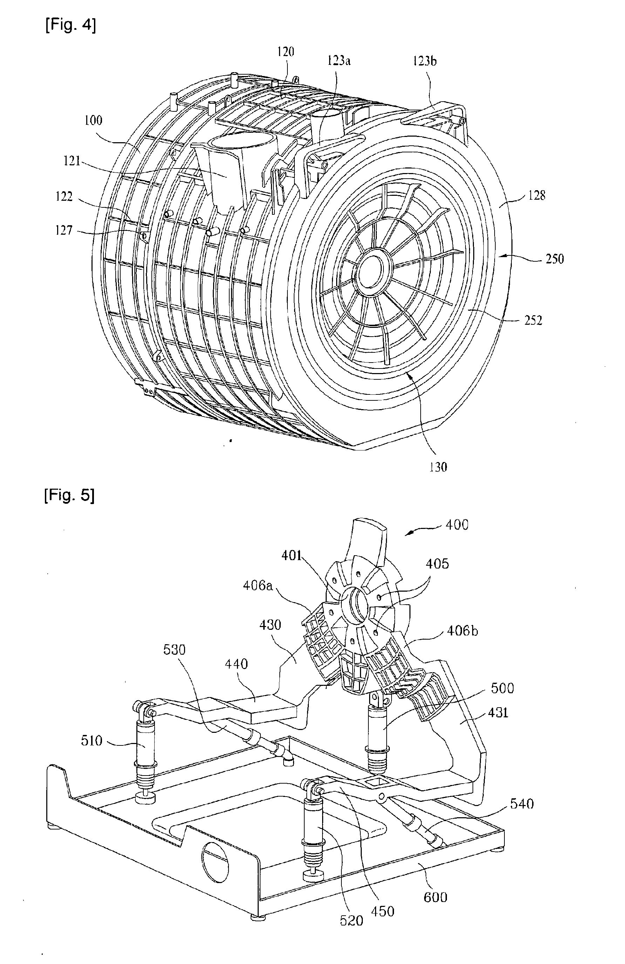

The tub rear 120 includes a rear surface 128 and the rear surface 128 forms a rear wall of the tub together with the tub back 130 and the rear gasket 250. The rear gasket 250 is sealedly connected to both of the tub back 130 and the tub rear 120, respectively, such that wash water inside the tub may be prevented from leaking. The tub back 130 is vibrated together with the drum during the rotation of the drum. Because of that, the tub back 130 is spaced apart a predetermined distance from the tub rear 120 enough not to interfere with the tub rear 120. As the rear gasket 250 is made of flexible material, the tub back 130 may interfere with the tub rear 120 and allow the tub back 130 to relative-move. The rear gasket 250 may include a winkle portion (252, see FIG. 4) extendible enough to allow such the relative motion of the tub back 130.

A foreign-substance-prevention-member 200 is connected to a front portion of the tub front 100 to prevent foreign substances from being stuck between the tub and the drum. The foreign-substance-prevention member 200 is made of flexible material and it is fixedly provided in the tub front 100 and it may be made of the same material of the rear gasket 250.

The drum may include a drum front 300, a drum center 320 and a drum back 340. Ball balancers 310 and 330 are installed in front and rear portions of the drum, respectively. The drum back 340 is connected with a spider 350 and the spider 350 is connected with a shaft 351. The drum is rotatable within the tub by the rotational force transmitted via the shaft 351.

The shaft 351 is directly connected to a motor, passing though the tub back 130, specifically, to a rotor of the motor. A bearing housing 400 is coupled to the rear surface 128 of the tub back 130 and the bearing housing 400 located between the motor and the tub back 130 rotatably supports the shaft 351.

A stator of the motor is fixedly installed in the bearing housing 400 and the rotor surrounds the stator. As mentioned above, the rotor is directly connected with the shaft 351. The motor is an outer-rotor type motor and it is directly connected with the shaft 351.

The bearing housing 400 is supported by a base 600 of the cabinet via a suspension unit. The suspension unit includes three vertical suspensions and oblique suspensions that are supported obliquely with respect to a forward/rearward direction. The suspension unit is connected to the base 600 of the cabinet flexibly enough to allow the drum to move forward/rearward and rightward/leftward, not connected fixedly.

That is, the suspension unit is supported by the cabinet base flexibly enough to enable predetermined rotation with respect to the connected portion in a forward/ rearward and rightward/leftward direction. The vertical suspensions may be connected to the base 600 by rubber-bushing. The vertical ones of the suspensions are configured to suspend the vibration of the drum flexible and the oblique ones of the suspensions are configured to damp the vibration. In other words, the vertically installed ones of the vibrating system including the spring and the damping means are employed as spring and the obliquely installed ones as damping means.

The other elements of the tub except the tub back 130 are fixedly installed in the cabinet and the vibration of the drum is suspendedly supported by the suspension unit. It can be said that the supporting structure of the tub is substantially separated from that of the drum and that the tub is not vibrated during the vibration of the drum.

As follows, each element will be described in detail.

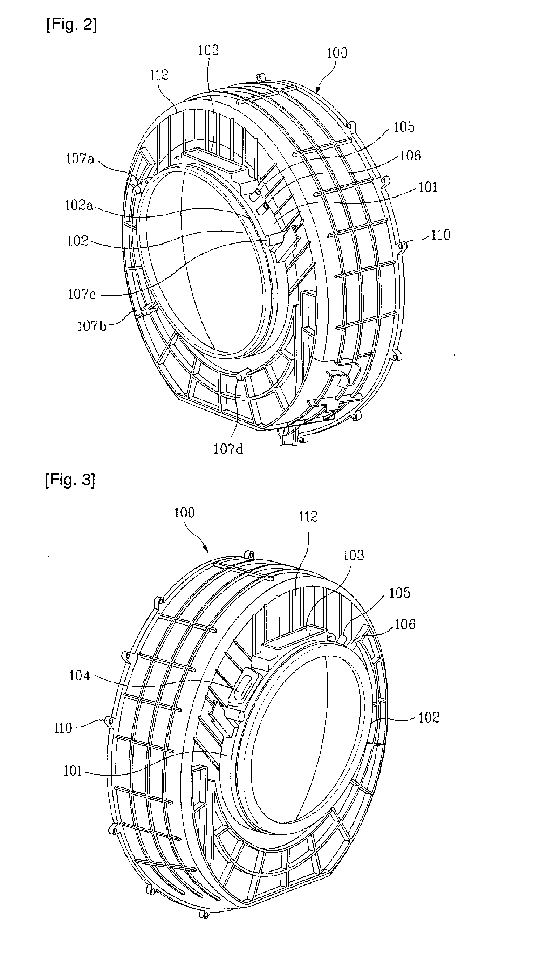

FIGS. 2 and 3 are diagrams illustrating the tub front 100. The tub front 100 has a donut-shaped vertical front surface formed in a cylindrical front portion defining a predetermined size wall portion of the tub. A rear portion of the cylindrical surface is open and a plurality of coupling holes 110 are formed in the rear portion. The coupling holes 110 are coupled with corresponding coupling holes (127, see FIG. 4) of the tub rear 120.

A rim portion 101 is extended forward from an inner circumferential surface of the front surface of the tub front 100 and the width of the rim portion 101 is getting smaller downward from a top of the rim portion 101. Here, the rim portion 191 may not be formed in a bottom of the inner circumference of the front surface substantially.

There may be formed in the rim portion 101 a water supply hole 104 to supply water, a hot air inlet 103 used to dry the laundry, a circulated water inlet 106 drawing the water circulated by a circulation pump there through and a steam inlet 105 drawing steam there through.

As the laundry machine according to the present invention has the structure having the noticeably reduced vibration of the tub, a water supply configuration such as a water supply hose, a drying configuration such as a drying duct, a steam supply configuration and a circulated-water supply configuration may be connected stably.

The hot air inlet 103 is approximately rectangular shaped and it is extended upward from the rim portion 101. Here, the hot air inlet 103 is required in a laundry machine having drying and washing functions and it is not necessary in a laundry machine having no drying function.

Water supply, for example, may be performed in the front portion of the tub because the water supply hole 104 and the like are formed in the front portion of the tub front 100.

The water supply hole 104 and the like may be in front of a front end of the drum accommodated in the tub. As a result, water to wash the laundry may be directly supplied to the drum inside via the opening formed in the drum to introduce the laundry. Fluidal material supplied to treat the laundry, for example, water, hot air and steam is directly drawn into the drum inside such that relatively more efficient washing treatment may be enabled. In case detergent is supplied via a detergent box together with the wash water, the detergent may be directly supplied to the drum inside and then detergent usage may be reduced such that water usage may be reduced. Because of that, detergent remnants accumulating in the bottom of the tub only to contaminate the drum may be reduced. In addition, if the water is supplied to the drum from the front portion of the tub, the supplied water may wash and clean a door glass (not shown) as well.

Even in case the hot air is supplied from the front portion of the tub, the flow of the hot air supplied from the vertical surface of the tub front 100 may be bent two times like " shape, which is formed after the hot air flowing to the front portion from the rear portion of the tub is bent downward and re-bent via the vertical surface of the tub. Because of that, the hot air path bent two times would make the hot air not flow smoothly. However, if the hot air inlet 103 is formed in the rim portion 101 of the tub front 100, the hot air may be bent one time in a vertical direction only to flow smoothly and efficiently.

The water supply hole 104 and the other configurations are located beyond the center of the drum. The water and the other fluidal material may be supplied to the drum inside from a predetermined portion beyond the front of the drum. If the water and the like are needed to be supplied to the drum inside from a portion below the front of the drum, the rim portion 101 of the tub front 100 may be alternatively formed in a lower portion of the front surface. Also, if the water and the like are needed to be supplied in a horizontal direction, the rim portion 101 may be formed in a center portion 103 of the inner circumference of the front surface. That is, the shape of the rim portion 101 may be diversified according to the direction of the fluidal materials supplied to the drum

A securing part 102 is formed in a front end of the rim portion 101 and the foreign-substance-prevention member 200 is secured to the securing part 102. The securing part 102 is extended forward from the front end of the rim portion 101, having an approximately small cylindrical shape and a rib 102a is formed in an outer circumferential surface of such the small cylindrical shaped securing part 102.

The securing part 102 is inserted in the foreign-substance-prevention member 200 to secure the foreign-substance-prevention member 200 thereto. The foreign-substance-prevention member 200 includes an insertion groove (not shown) to make the small cylindrical-shaped surface having the rib 102a inserted in the insertion groove.

The tub front 100 is fixedly connected to a cabinet front (not shown). For such the fixed connection, securing bosses 107a, 107b, 107c and 107d are formed in the front surface of the tub front, approximately surrounding the rim portion 101. After the cabinet front (not shown) is located in a state of the tub front 100 being installed, a screw is fastened from a forward direction to a rearward direction.

The steam inlet 105 may be connected to the steam hose. A steam guide 105a is formed to guide the steam drawn in the steam inlet 105 toward the drum inside and a circulated-water guide 106a is formed to guide circulated-water drawn via the circulated-water inlet 106 toward the drum inside. The steam inlet 105, the circulated-water inlet 106, the steam guide 105a and the circulated-water guide 106a are integrally formed in the tub front. The tub front 100 is plastic-molded and the steam inlet 105 and the like are injection-molded at this time.

The tub front 100 is coupled with the tub rear 120 only to form the space capable of accommodating the drum and the tub front and the tub rear 120 are fastened by a screw and for this screw-fastening, a plurality of screw fastening holes 110 are formed in the rear portion of the tub front along a circumferential direction.

FIG. 4 is a diagram illustrating the connection among the tub front 100, the tub rear 120, the tub back 130 and the rear gasket 250.

The tub rear 120 is cylindrical-shaped to surround the drum and a front portion of the tub rear 120 is open and a rear portion of the tub rear 120 has a donut-shaped rear surface 128. The front portion of the tub rear 120 is sealedly coupled to the tub front 100. a diameter of the rear surface 128 of the tub rear 120 is larger than an outer diameter of the tub back 130 enough such that the tub rear 120 has a distance large enough not to interfere with the rear surface 128 of the tub rear 120 even if the tub back 130 is vibrated. The rear gasket 250 is provided in the distance, that is, between the rear surface 128 of the tub rear 120 and the tub back 130. the rear gasket 250 seals the portion between the tub rear 120 and the rear surface 128 of the tub rear 120 and the rear gasket 250 includes the wrinkle portion 252 flexibly extendible enough not to interfere with vibration of the tub back 130.

A hot air outlet 121 for the laundry machine having the drying and washing functions is formed in the tub rear 120. As mentioned above, the hot air outlet 121 needs not be provided in the laundry machine having the washing function, not the drying function.

In the meanwhile, an auxiliary structure for fixedly support the tub with respect to the base may be formed in lower portions of the tub front 100 and the tub rear 120.

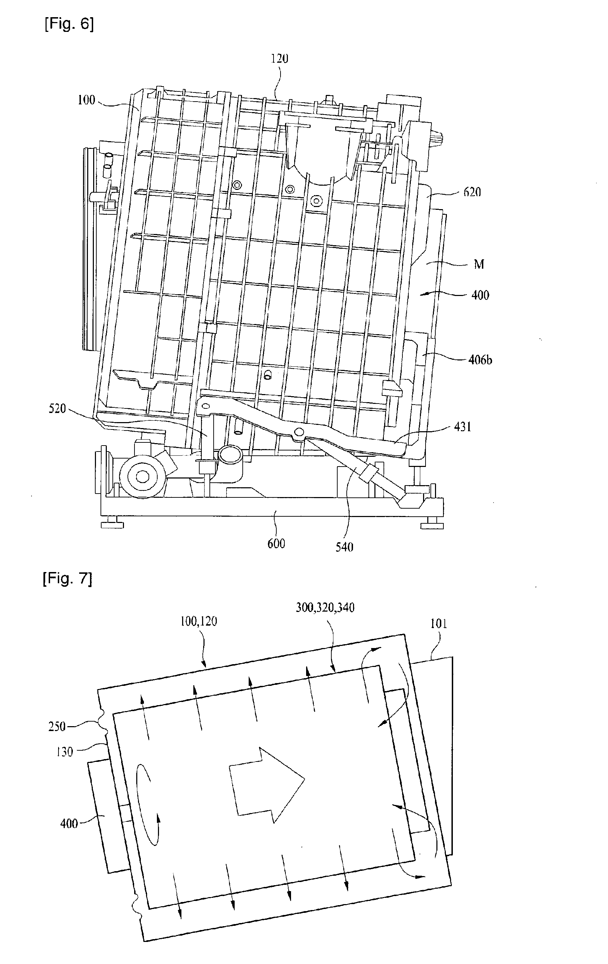

FIG. 5 is a diagram illustrating the suspension unit attached to the base 600. FIG. 6 is a diagram illustrating the tub 100 and 120, the bearing housing 400 and the suspension unit coupled to each other.

Here, the suspension unit includes a first weight 431, a second weight 430, a first suspension bracket 450 and a second suspension bracket 440.

The bearing housing includes a shaft hole 401 formed in a center thereof and the shaft 351 passes through the shaft hole 401. A pair of bearings 404 may be inserted in front and rear ends of the shaft hole 401, respectively, and the shaft 351 is rotatably supported by the bearings 404.

A plurality of tub-back-coupling holes 405 corresponding to the though holes of the tub back 130 may be formed in an outer portion of the shaft hole 401. A motor mounting portion (not shown) is formed in rear of the bearing housing 400 to mount the motor therein.

The bearing housing 400 is coupled to the tub back 130 by an auxiliary securing material passing the through hole 405. Here, the water seal 10 is disposed between the tub back 130 and the bearing housing to maintain gas tight of the tub back and the bearing housing.

A first extended portion 406a and a second extended portion 406b are formed toward both opposite portions of the bearing housing radially. The first and second weights 431 and 430 are connected to the first and second extended portions 406a and 406b, respectively, and the first and second suspension brackets 450 and 440 are connected to the first and second weights 431 and 430, respectively.

Here, the first extended portion 406a, the first weight 406b and the first suspension bracket 450 are symmetric to the second extended portion 406b, the second weight 430 and the second suspension bracket 440, respectively. Here, the first and second weights 431 and 430 are used to balance a mass center of the drum having received the laundry and they are also used as mass of the vibrating system in which the drum is vibrated.

The suspension unit includes vertical suspensions for suspending in the forward/ rearward direction and horizontal suspensions for suspending in the rightward/leftward direction. One of the vertical suspensions is provided in a rear portion and two of the vertical suspensions are in a front portion with respect to a center of the base. Two suspensions obliquely installed in the rightward/leftward direction are provided in both opposite side portions.

The suspension unit includes a first cylinder spring 520, a second cylinder spring 510, a third cylinder spring 500, a first cylinder damper 540 and a second cylinder damper 530.

The cylinder spring is configured of a cylinder, a piston and a spring installed between the cylinder and the piston. As it is a cylinder-spring shape, the cylinder spring has the length changeable stably when suspended. The cylinder is connected to the suspension bracket and the piston is connected to the base. The cylinder damper generates a damping effect by using friction-resistance while the piston is moving within the cylinder.

The first cylinder spring 520 is provided between the first suspension bracket 450 and the base 600. The second cylinder spring 510 is provided between the second suspension bracket 440 and the base 600. The third cylinder spring 500 is directly connected between the bearing housing 400 and the base 600. Such the cylinder springs suspendedly support the bearing housing in one rear portion and two front night/left portions of the base 600.

The first cylinder damper 540 is installed obliquely between the first suspension bracket 450 and the rear portion of the base. The second cylinder damper 530 is installed obliquely between the second suspension bracket 440 and the rear portion of the base.

The third cylinder spring 500 is provided in a center of the rear portion of the base and the first cylinder spring 520 and the second cylinder spring 510 are located in both right and left sides of a front portion of the base. The first cylinder damper 540 and the second cylinder damper 530 are located between the rear portion where the third cylinder spring 500 and the front portion where the first cylinder damper 540 is installed and between the rear portion and another front portion where the second cylinder damper 530 is installed, respectively, with being symmetrical to each other. Here, the cylinder springs are connected to the base 600 by rubber-bushing.

In case of the laundry machine according to the present invention mentioned above, pressure difference occurs between the drum inside and the space formed between the drum and the tub during the rotation of the drum at a high rotational number.

If the pressure difference occurs, the drum supported by the suspension happens to move forward inside the tub because of the pressure difference. If the forward movement of the drum is severe, a center shaft of the drum aviates from an original rotation center and the shaft might shake in upward/downward and rightward/leftward directions of the drum.

If then, the forwardly moved drum might collide against an inner front surface of the tub or the drum might shake in all of the directions only to collide against an inner circumferential surface of the tub. Because of that, a shock or noise generated by the collision could occur.

As follows, the forward movement of the drum generated in the laundry machine according to the present invention will be described in reference to FIG. 7.

FIG. 7 is a conceptual diagram illustrating pressure changes inside the tub of the laundry machine.

As shown in FIG. 7, the tub is fixed in the cabinet and the drum is rotatably provided in the tub, being rotatalbe inside the tub by the suspension, the tub back 130 and the rear gasket 250. Under this structure, the vibration generated during the rotation of the drum is prevented from being transmitted to the tub or cabinet. In this state, if the drum is rotated at a high rotation number, for example, during a drying-spinning cycle, a centrifugal force of the high speed rotation of the drum move air contained in the drum into space formed between an outer circumferential surface of the drum and an inner circumferential surface of the drum via a spinning holes formed in the drum or a gap between the drum and the tub, only to be rotated along the outer circumferential surface of the drum. As a result, the space inside the drum is in a vacuum like state such that quite a high pressure may be formed in the space between the outer circumferential surface of the drum and the inner circumferential surface of the tub.

In the meanwhile, the drum rotatably supported by the suspension tends to suck external air to compensate the vacuum like state. However, the centrifugal force generated by the rotation of the drum continuously discharges the air inside the drum along the circumferential direction of the drum. Because of that, it is difficult to suck the air in the circumferential direction of the drum such that air suction may be performed in the front opening of the drum.

The gap formed between the front opening and the front opening of the tub is substantially small and the tub itself is already sealed. As a result, it is very difficult to draw the air discharged or rotated along the outer circumferential surface of the drum by the centrifugal force of the drum into the gap between the front of the drum and the front of the tub.

In addition, the gap between the front of the drum and the front of the tub is formed quite narrow to prevent the laundry or foreign substances from being stuck in the gap. As a result, the speed of the air drawn into the gap between the front of the drum and the front of the tub may increase and then the pressure of the gap between the front of the drum and the front of the tub may decrease in comparison to the other portions.

The drum inside is in the vacuum like state and the space between the outer circumferential surface of the drum and the inner circumferential surface of the tub is in a higher pressure than the drum inside and the gap between the front of the drum and the front of the tub is in a lower pressure than the space between the outer circumferential surface of the drum and the inner circumferential surface of the tub. That is, the pressure may be formed in an order as follows; Drum Inside < Gap Between The Drum Front And Tub Front < Space Between Drum Outer Circumferential Surface And Tub Inner Circumferential Surface.

If such the pressure state is continued, the low pressure of the gap between the drum front and the tub front generates a force and the force is larger than the supporting force of the suspension supporting the drum, such that the drum may move forwardly into a front portion of the tub.

Specifically, the tub is fixed in the cabinet according to the present invention and the drum is vibrating. If the pressure difference between the drum inside and the outside occur within the tub, this forward movement of the drum pushed forwardly may be generated. Since the conventional laundry machine has the structure of the tub vibrating together with the drum, this pressure difference cannot make the drum pushed forwardly with respect to the tub.

As the drum is moved forwardly, the front portion of the rotating drum happens to collide against the inner front portion of the tub. Also, the forward movement of the drum changes the supporting state of the suspension and the drum would change the rotational center of the drum, not be supported appropriately. As a result, the drum is shaken during the rotation.

To prevent the forward movement and the shaking of the drum mentioned above, a pressure adjusting part is provided to stabilize the pressure between the drum and the tub and the pressure of the gap between the drum front and the tub front by drawing external air of the tub into the drum. As follows, the pressure adjusting part for adjusting the pressure inside the tub will be described in detail in reference to the corresponding drawings.

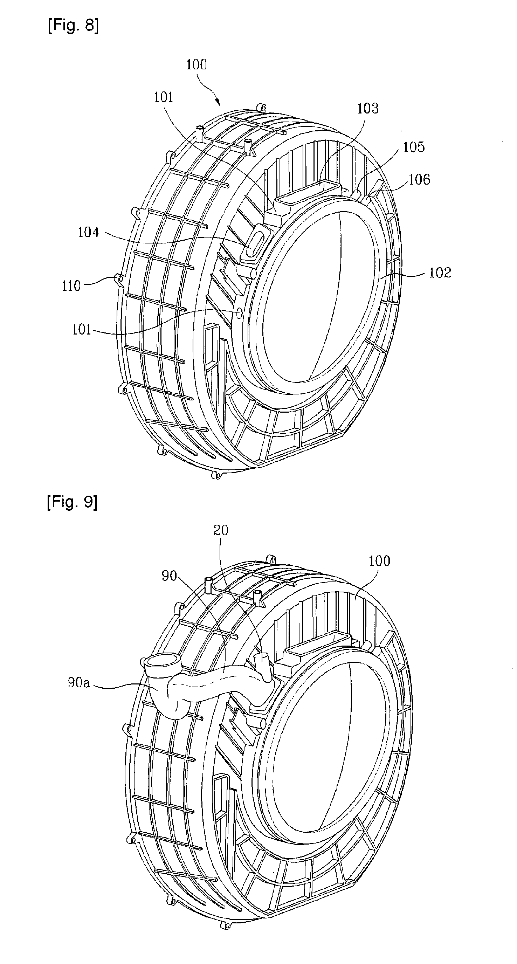

In reference to FIG. 8, a pressure adjusting part according to a first embodiment of the present invention will be described.

The pressure adjusting part according to this embodiment is provided as a pressure adjusting hole 10 having a through-hole shape that is formed in the rim portion 101 of the tub front 100. Such the pressure adjusting hole 10 makes the outside of the tub in communication with the inside of the tub to draw external air into the tub such that the vacuum like state of the drum inside may be relieved.

At this time, the pressure adjusting hole 10 passes through the rim portion 101 and the foreign-substance-prevention member 200 coupled to the rim portion 101. That is, the pressure adjusting hole 10 that is a path of the air used to adjust the pressure is located corresponding to the foreign-substance-prevention member 200 installed along the rim of the rim portion 101.

The pressure adjusting hole 10 is formed in the rim portion101 of the tub front 100 located in the front portion of the drum. As a result, external air is drawn into the tub via the pressure adjusting hole 10 and the air is moved into the center portion of the drum via the front opening of the drum. in other words, the external air of the tub may be drawn into the drum via the pressure adjusting hole 10 smoothly only to relieve the vacuum like state of the drum inside such that the pressure of the drum inside may be balanced with the pressure between the outer circumferential surface of the drum and the outer circumferential surface of the tub.

Such the pressure adjusting hole 10 may be formed in the rim portion 101 of the tub 100, with the predetermined height from the bottom of the water receiving portion of the tub, for example, higher than the height of the water received in the tub.

Not shown in the drawing, a connection pipe (not shown) may be provided in the pressure adjusting hole 10 and the connection pipe is extended or bent upward in communication with the pressure adjusting hole 10. Such the connection pipe can form a path of the air drawn into the tub and it can prevent the water received in the tub or bubbles generated from the water from leaking out of the tub.

Also, this pressure adjusting hole 10 make the outside in communication with the inside of the tub. As a result, the pressure difference in the drum inside, the space between the outer circumferential surface of the drum and the inner circumferential surface of the tub and the gap between the drum front and the tub front may be reduced.

Because of that, the forward movement of the drum generated during the rotation of the drum at the high rotation number may be prevented. In addition, the collision of the drum against the tub caused by the forward movement of the drum and the shaking of the drum caused by the change of the rotation center of the drum may be prevented.

As follows, a pressure adjusting part according to a second embodiment of the present invention will be described in reference to FIG. 9.

As shown in FIG. 9, the pressure adjusting part according to the second embodiment may be a pressure adjusting pipe 20 branched from the water supply hose 90 to supply water and detergent to the tub.

Prior to describing the pressure adjusting pipe, the water supply hose 90 formed in the tub front 100 will be described. As shown in FIG. 9, the water supply hose 90 is connected with a detergent box. The water supply hose 90 includes a curvature portion 90a curved in a 'U' shape. If water is filled in the U-shaped portion 90a, unpleasant smell inside the tub is prevented from discharged outside via the detergent box.

The water supply hose 90 is inserted in the water supply hole 104 of the tub front 100 and the pressure adjusting pipe 20 configured of a branched pipe branched from the water supply hose is formed in the water supply hose 90. The pressure adjusting pipe 20 may be connected with detergent box and the water supply hose. The pressure adjusting pipe 20 makes the tub inside in communication with the tub outside.

The water supply hose 90 cannot be used to make the communication because of the 'U' shaped portion 90a having the water filled therein. Without the U-shaped portion 90a, the water supply hose 90 may be used to make the drum inside in communication with the drum outside. In this case, the above pressure adjusting pipe 20 may not be provided.

Such the pressure adjusting pipe 20 makes external air of the tub drawn into the tub and pass the front opening of the drum and then move to the center portion of the drum. in other words, the external air of the tub is drawn into the drum by the pressure adjusting pipe 20 and it relieve the vacuum-like state of the drum inside such that the pressure of the drum inside may be balanced with the pressure between the outer circumferential surface of the drum and the inner circumferential surface of the tub.

Such the pressure adjusting pipe 20 make the outside communicate with the inside of the tub. As a result, the pressure difference in the drum inside, the space between the outer circumferential surface of the drum and the inner circumferential surface of the tub and the gap between the drum front and the tub front may be reduced during the rotation of the drum.

In addition, the forward movement of the drum generated during the rotation of the drum at the high rotation number may be prevented. Also, the collision between the drum moved forwardly and the tub and the shaking of the drum caused by the change of the rotation center of the drum may be prevented.

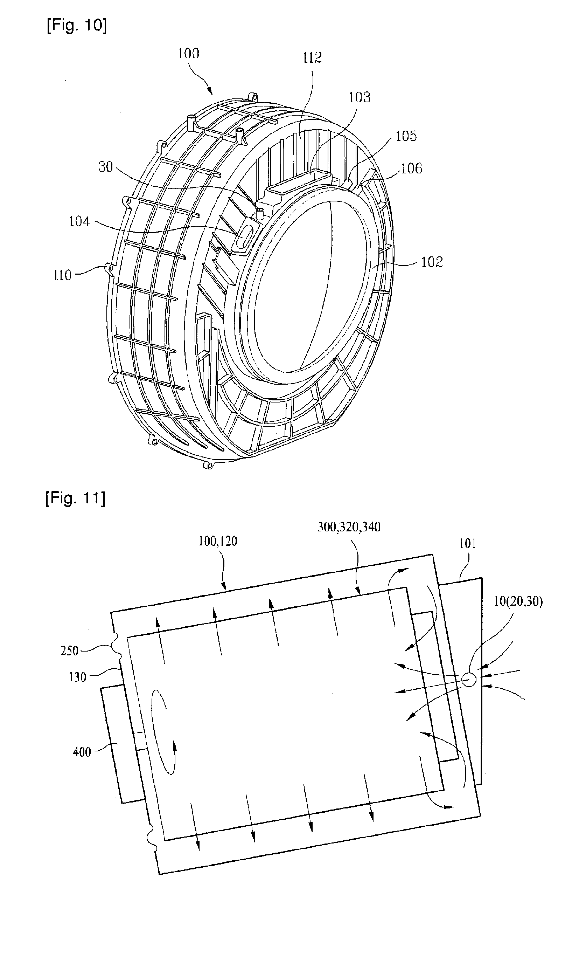

As follows, a pressure adjusting part according to a third embodiment of the present invention will be described in reference to FIG. 10.

As shown in FIG. 10, the pressure adjusting part according to the third embodiment of the present invention may be a pressure adjusting protrusion 30 projected from the rim portion 101 connected with the water supply hose 90 supplying the water and the detergent. The pressure adjusting protrusion 30 may include an auxiliary connection pipe (not shown) connected with the detergent box.

Specifically, the water supply hole 104 is formed in the rim portion 101 of the tub front 100 and the pressure adjusting protrusion 30 having a hollow formed therein is projected to make the tub inside communicate with the tub outside. Such the pressure adjusting protrusion 30 may be formed only to make the tub outside communicate with the tub inside, not connected with the other auxiliary members. However, the pressure adjusting protrusion 30 may include the auxiliary connection pipe to be connected with the detergent box.

The pressure adjusting protrusion 30 may be employed to perform the same functions of the pressure adjusting hole 10, the pressure adjusting pipe 20 according to the above embodiments. However, the pressure adjusting protrusion 30 is somewhat different from the pressure adjusting pipe 20 according to the second embodiment. That is, if the pressure adjusting pipe 20 is branched from the water supply hole 104 according to the second embodiment, the pressure adjusting pipe is closed only to lose the pressure adjusting function when water supply is performed via the water supply hose 90. Also, in case the water supply is performed via the water supply hose 90, the air inside the tub fails to be exhausted such that the water supply may not be performed smoothly. However, the pressure adjusting protrusion 30 according to the third embodiment is provided independent from the water supply hose 90 such that it may perform its function in regardless of the water supply of the water supply hose 90.

Such the pressure adjusting protrusion 30 makes external air of the tub drawn into the tub and pass the front opening of the drum and then move to the center portion of the drum. in other words, the external air of the tub is drawn into the drum by the pressure adjusting protrusion 30 and it relieve the vacuum-like state of the drum inside such that the pressure of the drum inside may be balanced with the pressure between the outer circumferential surface of the drum and the inner circumferential surface of the tub.

Such the pressure adjusting protrusion 30 make the outside communicate with the inside of the tub. As a result, the pressure difference in the drum inside, the space between the outer circumferential surface of the drum and the inner circumferential surface of the tub and the gap between the drum front and the tub front may be reduced during the rotation of the drum.

In addition, the forward movement of the drum generated during the rotation of the drum at the high rotation number may be prevented. Also, the collision between the drum moved forwardly and the tub and the shaking of the drum caused by the change of the rotation center of the drum may be prevented.

The pressure adjusting hole 10, the pressure adjusting pipe 20 and the pressure adjusting protrusion 30 according to the above embodiments make the tub inside communicate with the tub outside such that they may be employed to open a door (not shown) smoothly. That is, in the state of the tub being sealed, the pressure of the tub inside may be different from the outside pressure of the door and then it requires quite a large power to open the door. However, the pressure adjusting hole 10, the pressure adjusting pipe 20 and the pressure adjusting protrusion 30 making the tub inside communicate with the tub outside may reduce the pressure difference between the tub inside and the tub outside. As a result, a relatively small power may open and close the door.

As follows, the operation of the pressure adjusting part of the laundry machine according to the present invention will be described in reference to the corresponding drawings.

FIG. 11 is a conceptual diagram illustrating pressure changes inside the tub.

As shown in FIG. 11, if pressure changes are generated in the drum inside and between the drum and the tub during the rotation of the drum, external air of the tub is drawn into the drum via the pressure adjusting part, for example, the pressure adjusting hole 10, the pressure adjusting pipe 20 and the pressure adjusting protrusion 30, only to increase the pressure of the drum inside. Such the drawn air reduces the difference between the pressure between the drum and the tub and the pressure of the drum inside. As a result, the pressure inside the tub may be distributed uniformly with the external air drawn into the tub.

Because of that, the difference between the pressure of the drum inside and the pressure between the outer circumferential surface of the drum and the inner circumferential surface of the tub may be reduced such that the forward movement of the drum may be prevented.

Furthermore, the tub of the laundry machine according to this embodiment is directly secured to the cabinet, not moving. As a result, the diameter of the tub may be enlarged and the capacity of the tub as well as the drum may be enlarged also.

A still further, only the predetermined portion of the rotating drum is supported and thus the capacity of the drum inside may be improved, compared with the conventional laundry machine having the both opposite ends of the drum supported. As a result, the number of required parts may be reduced enough to improve productivity.

A still further, the tub is fixedly secured to the cabinet. In case the vibration or shock is transmitted to the tub integrally assembled with the cabinet, the tub itself is shaken by the vibration or shock and also the weight of the cabinet is applied to the tub. As a result, the rigidity of the tub may be improved and the overall vibration technical feature of the drum type laundry machine may be improved advantageously.

## Claims

1. A laundry machine comprising:
- a tub (100, 120) to hold water therein and comprising a rim portion (101) forming an opening formed in a front portion of the tub (100, 120);
- a drum (300, 320, 340) provided in the tub (100, 120), the drum rotatable with respect to the tub (100, 120);
- a drive assembly comprising a shaft (351) connected to the drum (300, 320, 340);
- a bearing housing (400) rotatably supporting the shaft (351), and a motor to rotate the shaft (351); and
- a flexible material (250) to prevent the water inside the tub (100, 120) from leaking toward the drive assembly and allow the drive assembly to move relatively to the tub (100, 120); and **characterised in that** the laundry machine comprises
- a pressure adjusting part (10; 20; 30) that passes through the rim portion (101) of the opening of the tub (100, 120) to prevent forward movement of the drum (300, 320, 340) generated by pressure difference during the rotation of the drum (300, 320, 340),
wherein the pressure adjusting part (10; 20; 30) draws external air of the tub (100, 120) into the drum (300, 320, 340) during the rotation of the drum (300, 320, 340).

2. The laundry machine as claimed in claim 1, wherein the pressure adjusting part (20) is formed of a pipe having a predetermined length.

3. The laundry machine as claimed in claim 2, wherein the tub (100, 120) comprises a water supply hose (90) to supply water to the tub (100, 120) and the pressure adjusting part is a pressure adjusting pipe (20) branched from the water supply hose (90).

4. The laundry machine as claimed in claim 2, wherein the tub (100, 120) comprises a hot air inlet (103) to supply hot air to the tub (100, 120) and the pressure adjusting part is a pressure adjusting pipe (20) branched from the hot air inlet (103).

5. The laundry machine as claimed in claim 3, wherein the water supply hose (90) is connected to the rim portion (101), passing through the rim portion (101).

6. The laundry machine as claimed in claim 3, wherein the rim portion (101) comprises a foreign-substance-prevention member (200) and the water supply hose (90) pass through the rim portion (101) and the foreign-substance-prevention member (200).

7. The laundry machine as claimed in claim 3, wherein the water supply hose comprises a detergent box to supply water and detergent to the tub (100, 120) and the pressure adjusting pipe (90) is connected to the detergent box, branched from the water supply hose (90).

8. The laundry machine as claimed in claim 1, wherein the rim portion (101) comprises a foreign-substance-prevention member (200) and the pressure adjusting part (10; 20; 30) is formed through the rim portion (101) and the foreign-substance-prevention member (200).

9. The laundry machine as claimed in claim 1, wherein the tub (100, 120) comprises a rim portion (101) defining an opening formed in a front portion thereof and the pressure adjusting part is a pressure adjusting protrusion (30) extended from the rim portion (101), the pressure adjusting protrusion (30) having a hollow formed therein.

10. The laundry machine as claimed in claim 9, wherein the tub (100, 120) further comprises a detergent box to supply water and detergent and the pressure adjusting protrusion (30) comprises a connection pipe connecting the pressure adjusting protrusion (30) with the detergent box.

11. The laundry machine as claimed in any one of the preceding claims, wherein a suspension unit is attached to the bearing housing.

## Patentansprüche

1. Waschmaschine, die umfasst:
- einen Bottich (100, 120), um Wasser darin zu halten, der einen Randabschnitt (101) umfasst, der eine Öffnung bildet, die in einem vorderen Abschnitt des Bottichs (100, 120) ausgebildet ist;
- eine Trommel (300, 320, 340), die in dem Bottich (100, 120) vorgesehen ist, wobei die Trommel in Bezug auf den Bottich (100, 120) drehbar ist;
- eine Antriebsanordnung, die eine Welle (351) umfasst, die mit der Trommel (300, 320, 340) verbunden ist;
- ein Lagergehäuse (400), das die Welle (351) drehbar lagert, und einen Motor, um die Welle (351) zu drehen; und
- ein flexibles Material (250), um zu verhindern, dass das Wasser in dem Bottich (100, 120) in Richtung der Antriebsanordnung austritt, und um zu ermöglichen, dass die Antriebsanordnung sich relativ zu dem Bottich (100, 120) bewegt; und
**dadurch gekennzeichnet, dass** die Wachmaschine umfasst:
- einen Druckeinstellteil (10; 20; 30), der durch den Randabschnitt (101) der Öffnung des Bottichs (100, 120) verläuft, um eine Vorwärtsbewegung der Trommel (300, 320, 340), die durch den Druckunterschied während der Drehung der Trommel (300, 320, 340) verursacht wird, zu verhindern,
wobei der Druckeinstellteil (10; 20; 30) Luft außerhalb des Bottichs (100, 120) während der Drehung der Trommel (300, 320, 340) in die Trommel (300, 320, 340) saugt.

2. Waschmaschine nach Anspruch 1, wobei das Druckeinstellteil (20) durch ein Rohr mit einer vorbestimmten Länge gebildet ist.

3. Waschmaschine nach Anspruch 2, wobei der Bottich (100, 120) einen Wasserversorgungsschlauch (90) umfasst, um den Bottich (100, 120) mit Wasser zu versorgen, und der Druckeinstellteil ein Druckeinstellrohr (20) ist, das von dem Wasserversorgungsschlauch (90) abzweigt.

4. Waschmaschine nach Anspruch 2, wobei der Bottich (100, 120) einen Heißlufteinlass (103) umfasst, um den Bottich (100, 120) mit heißer Luft zu versorgen, und der Druckeinstellteil ein Druckeinstellrohr (20) ist, das von dem Heißlufteinlass (103) abzweigt.

5. Waschmaschine nach Anspruch 3, wobei der Wasserversorgungsschlauch (90) mit dem Randabschnitt (101) verbunden ist und durch den Randabschnitt (101) verläuft.

6. Waschmaschine nach Anspruch 3, wobei der Randbereich (101) ein Fremdstoff-Vermeidungselement (200) umfasst und der Wasserversorgungsschlauch (90) durch den Randabschnitt (101) und das Fremdstoff-Vermeidungselement (200) verläuft.

7. Waschmaschine nach Anspruch 3, wobei der Wasserversorgungsschlauch einen Waschmittelkasten umfasst, um den Bottich (100, 120) mit Wasser und Waschmittel zu versorgen, und das Druckeinstellrohr (90), das von dem Wasserversorgungsschlauch (90) abzweigt, mit dem Waschmittelkasten verbunden ist.

8. Waschmaschine nach Anspruch 1, wobei der Randabschnitt (101) ein Fremdstoff-Vermeidungselement (200) umfasst und der Druckeinstellteil (10; 20; 30) durch den Randabschnitt (101) und das Fremdstoff-Vermeidungselement (200) ausgebildet ist.

9. Waschmaschine nach Anspruch 1, wobei der Bottich (100, 120) einen Randabschnitt (101) umfasst, der eine Öffnung definiert, die in einem vorderen Abschnitt davon ausgebildet ist, und der Druckeinstellteil ein Druckeinstellvorsprung (30) ist, der sich von dem Randabschnitt (101) erstreckt, wobei der Druckeinstellvorsprung (30) einen Hohlraum aufweist, der in ihm ausgebildet ist.

10. Waschmaschine nach Anspruch 9, wobei der Bottich (100, 120) ferner einen Waschmittelkasten umfasst, um Wasser und Waschmittel zu liefern, und der Druckeinstellvorsprung (30) ein Verbindungsrohr umfasst, das den Druckeinstellvorsprung (30) mit dem Waschmittelkasten verbindet.

11. Waschmaschine nach einem der vorhergehenden Ansprüche, wobei eine Aufhängungseinheit an dem Lagergehäuse angebracht ist.

## Revendications

1. Machine à laver comprenant :
- une cuve (100, 120) pour contenir de l'eau à l'intérieur et comprenant une portion de bordure (101) formant une ouverture formée dans une portion frontale de la cuve (100, 120) ;
- un tambour (300, 320, 340) prévu dans la cuve (100, 120), le tambour étant capable de rotation par rapport à la cuve (100, 120) ;
- un ensemble d'entraînement comprenant un arbre (351) connecté au tambour (300, 320, 340) ;
- un boîtier de palier (400) supportant en rotation l'arbre (351), et un moteur pour mettre l'arbre (351) en rotation ; et
- un matériau flexible (350) pour empêcher à l'eau à l'intérieur de la cuve (100, 120) de fuir vers l'ensemble d'entraînement et permettre à l'ensemble d'entraînement de se déplacer par rapport à la cuve (100, 120) ; et
**caractérisé en ce que** la machine à laver comprend
- une partie d'ajustement de pression (10 ; 20 ; 30) qui passe à travers la portion de bordure (101) de l'ouverture de la cuve (100, 120) pour empêcher un mouvement du tambour (300, 320, 340) vers l'avant généré par une différence de pression pendant la rotation du tambour (300, 320, 340),
dans laquelle la partie d'ajustement de pression (10 ; 20 ; 30) aspire de l'air extérieur de la cuve (100, 120) vers l'intérieur du tambour (300, 320, 340) pendant la rotation du tambour (300, 320, 340).

2. Machine à laver selon la revendication 1, dans laquelle la partie d'ajustement de pression (20) est formée d'un tube ayant une longueur prédéterminée.

3. Machine à laver selon la revendication 2, dans laquelle la cuve (100, 120) comprend un tuyau d'alimentation d'eau (90) pour alimenter de l'eau à la cuve (100, 120) et la partie d'ajustement de pression est un tube d'ajustement de pression (20) ramifié depuis le tuyau d'alimentation d'eau (90).

4. Machine à laver selon la revendication 2, dans laquelle la cuve (100, 120) comprend une entrée d'air chaud (103) pour alimenter de l'air chaud à la cuve (100, 120) et la partie d'ajustement de pression est un tube d'ajustement de pression (20) ramifié depuis l'entrée d'air chaud (103).

5. Machine à laver selon la revendication 3, dans laquelle le tuyau d'alimentation d'eau (90) est connecté à la portion de bordure (101) et passe à travers la portion de bordure (101).

6. Machine à laver selon la revendication 3, dans laquelle la portion de bordure (101) comprend un élément d'empêchement de substances étrangères (200) et le tuyau d'alimentation d'eau (90) passe à travers la portion de bordure (101) et l'élément d'empêchement de substances étrangères (200).

7. Machine à laver selon la revendication 3, dans laquelle le tuyau d'alimentation d'eau comprend une boîte à détergent pour alimenter de l'eau et du détergent à la cuve (100, 120) et le tube d'ajustement de pression (90) est connecté à la boîte à détergent, en étant ramifié depuis le tuyau d'alimentation d'eau (90).

8. Machine à laver selon la revendication 1, dans laquelle la portion de bordure (101) comprend un élément d'empêchement de substances étrangères (200) et la partie d'ajustement de pression (10 ; 20 ; 30) est formée à travers la portion de bordure (101) et l'élément d'empêchement de substances étrangères (200).

9. Machine à laver selon la revendication 1, dans laquelle la cuve (100, 120) comprend une portion de bordure (101) définissant une ouverture formée dans une portion frontale d'elle-même, et la partie d'ajustement de pression est une projection d'ajustement de pression (30) qui s'étend depuis la portion de bordure (101), la projection d'ajustement de pression (30) ayant un creux formé à l'intérieur.

10. Machine à laver selon la revendication 9, dans laquelle la cuve (100, 120) comprend en outre une boîte à détergent pour alimenter de l'eau et du détergent, et la projection d'ajustement de pression (30) comprend un tube de connexion qui connecte la projection d'ajustement de pression (30) avec la boîte à détergent.

11. Machine à laver selon l'une quelconque des revendications précédentes, dans laquelle une unité de suspension est attachée au boîtier de palier.
